Europäisches Patentamt

European Patent Office

Office européen des brevets

(19)

(11) **EP 0 936 724 A1**

(12) **EUROPÄISCHE PATENTANMELDUNG**

(43) Veröffentlichungstag:
18.08.1999 Patentblatt 1999/33

(51) Int. Cl.⁶: **H02M 3/158**

(21) Anmeldenummer: 98102370.8

(22) Anmeldetag: 11.02.1998

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(71) Anmelder:
**Schaltbau Aktiengesellschaft
D-81677 München (DE)**

(72) Erfinder:
**Schulin, Gunter, Dipl.-Ing.
85598 Baldham (DE)**

(74) Vertreter:
**Grünecker, Kinkeldey,
Stockmair & Schwanhäusser
Anwaltssozietät
Maximilianstrasse 58
80538 München (DE)**

(54) **Spannungswandler**

(57)     Die vorliegende Erfindung bezieht sich auf einen Spannungswandler mit einem Hochsetzsteller und einem diesem nachgeschalteten Gleichspannugswandler. Sowohl der Hochsetzsteller wie auch der Gleichspannungswandler weisen einen ersten Zweig mit mehreren seriell verbundenen Schaltventilen und einen dazu parallelen zweiten Zweig mit mehreren seriell verbundenen Kondensatoren auf. Der Hochsetzsteller weist wenigstens eine Kurtschlußverbindung zwischen zwei der in Reihe geschalteten Schaltventilen und zwei der in Reihe geschalteten Kondensatoren auf. Der Gleichspannungswandler ist durch Ausbilden wenigstens einer Kurzschlußverbindung zwischen beiden Zweigen in mehrere Gleichspannungswandlermodule aufgetrennt. Durch die erwähnten Kurzschlußverbindungen werden sowohl im Hochsetzsteller wie auch im Gleichspannungswandler Überspannungen an einzelnen Bauelementen während des Betriebs des Spannungswandlers mit Hochspannung verhindert.

FIG.6

EP 0 936 724 A1

**Beschreibung**

Die vorliegende Erfindung bezieht sich auf einen Spannungswandler gemäß dem Oberbegriff der Patentansprüche 1 und 7.

Spannungswandler gemäß der vorliegenden Erfindung finden beispielsweise Anwendung in Energieversorgungsblöcken für Reisezugwagen der Bahn. Die Energieversorgungsblöcke werden als kompletter Behälter unter den Reisezugwagen eingebaut und sind dazu bestimmt, verschiedene elektrische Systeme innerhalb eines einzelnen Reisezugwagens über eine Sammelschiene mit Energie zu versorgen. Der erfindungsgemäße Spannungswandler ist wesentlicher Bestandteil eines Energieversorgungsblockes und wird i.d.R. in sog. Mehrspannungsfahrzeugen benutzt, die im internationalen, grenzüberschreitenden Bahnverkehr mit unterschiedlichen Netzspannungen eingesetzt werden.

Der erfindungsgemäße Spannungswandler weist einen Hochsetzsteller und einen diesem nachgeschalteten Gleichspannungswandler auf. Basisversionen des Hochsetzstellers und des Gleichspannungswandlers sind aus dem Stand der Technik als Aufwärtsregler bzw. Halbbrücken-Wandler bekannt (vgl. dazu Thiel, Professionelle Schaltnetzteil-Applikationen, Franzis Verlag, Kapitel 2.3.2 und 2.3.8). Weiterhin kann als bekannt voraus gesetzt werden, daß die erwähnten Basisversionen für den Einsatz bei Hochspannung in der Weise verändert werden, daß ursprünglich einfach vorgesehene Bauelemente, wie z. B. Schalter oder Kondensatoren, in einer abgewandelten Hochspannungsversion durch eine Reihenschaltung gleichartiger Bauelemente ersetzt werden.

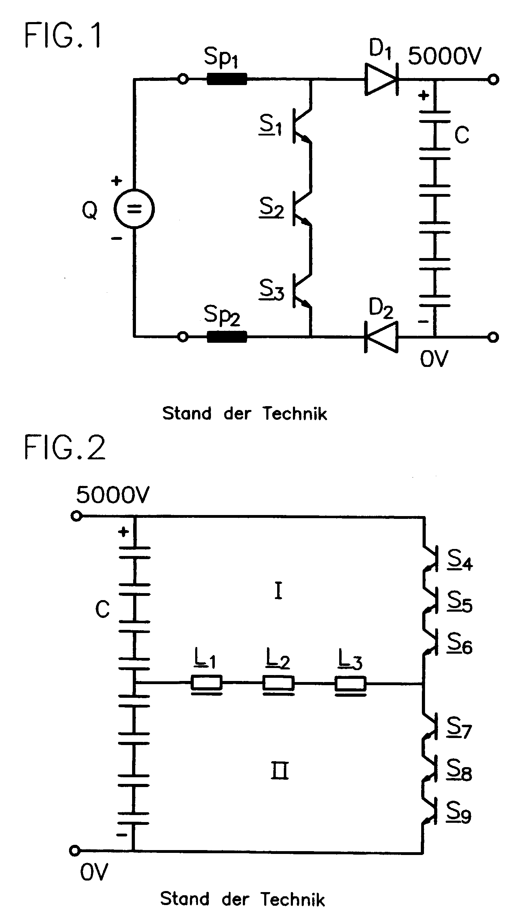

Vor dem Hintergrund dieser Überlegungen gelangt man zu einer Grundschaltung für einen Hochsetzsteller, welcher der vorliegenden Erfindung zugrunde liegt und in Fig. 1 dargestellt ist. Wie aus Fig. 1 ersichtlich, liegt am Eingang des Hochsetzstellers eine Gleichspannung oder eine gleichgerichtete Wechselspannung Q mit einem Spannungswert von etwa $700 V_{AC}$ - $4200\ V_{DC}$ an. Die Grundschaltung des Hochsetzstellers umfaßt eine Reihenschaltung von zwei Spulen $Sp_1$ und $Sp_2$ sowie eine zwischen die beiden Spulen geschaltete Reihenschaltung von Schaltventilen $\underline{S}_1$ bis $\underline{S}_3$. Parallel zur Reihenschaltung der Schaltventile ist eine Reihenschaltung bestehend aus zwei Freilaufdioden $D_1$ und $D_2$ und einem zwischen die Dioden geschalteten Kondensator C geschaltet. Die Anode der Freilaufdiode $D_1$ ist mit dem Knoten zwischen der Spule $Sp_1$ und dem Schaltventil $\underline{S}_1$ verbunden, während ihre Kathode mit einem Anschluß des Kondensators C verbunden ist. Die Anode der Freilaufdiode $D_2$ ist mit dem anderen Anschluß des Kondensators C verbunden, während ihre Kathode den Knoten zwischen dem Schaltventil $\underline{S}_3$ und Spule $Sp_2$ kontaktiert.

Bei der Funktionsweise der Grundschaltung des Hochsetzstellers gemäß Fig. 1 sind zwei Schaltzustände zu unterscheiden, wobei vorausgesetzt wird, daß die in Reihe geschalteten Schaltventile $\underline{S}_1$ bis $\underline{S}_3$ hochsynchron geschaltet werden.

Unter dieser Voraussetzung ist ein erster Schaltzustand dann gegeben, wenn alle drei Schaltventile durchgeschaltet sind, also eine leitende Verbindung zwischen den beiden Spulen $Sp_1$ und $Sp_2$ besteht. In diesem ersten Schaltzustand werden die beiden Spulen "aufgeladen", d. h. es wird Energie von der Spannungsquelle Q am Eingang des Hochsetzstellers durch den sich ändernden Stromfluß durch die beiden Spulen in diese übertragen. Die beiden Freilaufdioden $D_1$ und $D_2$ wirken für die Kondensatorspannung in Sperrichtung, so daß eine Entladung des Kondensators C über die leitende Verbindung der Schaltventile $\underline{S}_1$ bis $\underline{S}_3$ verhindert wird.

Im zweiten Schaltzustand sperren alle Schaltventile $\underline{S}_1$ bis $\underline{S}_3$. In dieser Situation wirken die beiden Spulen $Sp_1$ und $Sp_2$ als zusätzliche Spannungsquellen gegenüber der angelegten Eingangsspannung, wobei sich die in ihnen induzierten Spannungen zur Eingangsgleichspannung Q hinzuaddieren. Es liegt dann über der Reihenschaltung der Schaltventile $\underline{S}_1$ bis $\underline{S}_3$ eine gegenüber der Eingangsspannung wesentlich erhöhte Spannung an, auf die der Kondensator C über die beiden Freilaufdioden $D_1$ und $D_2$, die jetzt in Durchlaßrichtung geschaltet sind, aufgeladen wird. Die hochgesetzte Spannung über dem Kondensator kann als Ausgangsspannung des Hochsetzstellers abgegriffen werden.

Fig. 2 zeigt eine Grundschaltung für einen Gleichspannungswandler, welche einen Transformator aufweist, der die Schaltung in eine primärseitige und eine sekundärseitige Teilschaltung auftrennt, wobei nur erstere in Fig. 2 dargestellt ist. Gemäß Fig. 2 wird die zu wandelnde Gleichspannung von einem Kondensator C bereitgestellt. Parallel zum Kondensator C ist eine Reihenschaltung von sechs Schaltventilen $\underline{S}_4$ bis $\underline{S}_9$ geschaltet. Weiterhin umfaßt die primärseitige Teilschaltung des Gleichspannungswandlers eine Reihenschaltung von Primärspulen $\underline{L}_1$ bis $\underline{L}_3$ einzelner Transformatoren, wobei diese Reihenschaltung als Verbindungszweig zwischen dem Kondensator C und der Reihenschaltung der Schaltventile ($\underline{S}_4$ bis $\underline{S}_9$) dient. Genauer gesagt, verbindet der Zweig mit der Reihenschaltung der Primärspulen $\underline{L}_1$ bis $\underline{L}_3$ einen Mittelabgriff des Kondensators C mit dem Knoten zwischen dem dritten $\underline{S}_6$ und vierten $\underline{S}_7$ Schaltventil.

Auch bei der Grundschaltung des Gleichspannungswandlers werden unter der Voraussetzung einer hochsynchronen Schaltung von jeweils drei Schaltventilen $\underline{S}_4$ bis $\underline{S}_6$ oder $\underline{S}_7$ bis $\underline{S}_9$ zwei Schaltzustände unterschieden. Die Schaltventile $\underline{S}_4$ bis $\underline{S}_6$ der Masche I werden antizyklisch zu den Schaltventilen $\underline{S}_7$ bis $\underline{S}_9$ der Masche II geschaltet.

In einem ersten Schaltzyklus werden die Schaltventile $\underline{S}_4$ bis $\underline{S}_6$ synchron durchgeschaltet, während die Schaltventile $\underline{S}_7$ bis $\underline{S}_9$ sperren. In dieser Situa-

tion fließt ein Strom vom hohen Kondensatorpotential (+) über die Schaltventile und die Primärspulen $L_1$ bis $L_3$ zum Mittelabgriff des Kondensators. Auf diese Weise werden die in Reihe geschalteten Primärspulen alle vom gleichen Strom durchflossen, so daß sie phasengleiche und betragsgleiche Magnetfelder erzeugen.

Im zweiten Schaltzustand sperren die Schaltventile $S_4$ bis $S_6$, während die Schaltventile $S_7$ bis $S_9$ gleichzeitig in Durchlassrichtung geschaltet sind. In Masche II fließt dann ein Strom vom Mittelabgriff des Kondensators C über die nachgeschalteten Primärspulen $L_1$ bis $L_3$ und die drei Schaltventile $S_7$ bis $S_9$ zum niedrigen Potential (-) des Kondensators. Im Vergleich zum ersten Schaltzustand fließt jetzt ebenfalls durch alle Primärspulen ein betragsgleicher Strom, der allerdings entgegengesetzt zur Richtung während des ersten Schaltzustandes fließt. Die Primärspulen $L_1$ bis $L_3$ erzeugen jetzt ebenfalls ein phasengleiches und betragsgleiches Magnetfeld, das allerdings gegenüber dem ersten Schaltzustand umgekehrt gepolt ist.

Auf diese Weise entsteht in den Primärspulen ein magnetisches Wechselfeld, das über einen gemeinsamen Eisenkern auf der Sekundärseite des Transformators (nicht mehr dargestellt in Fig. 2) eine Wechselspannung induziert. Diese Wechselspannung wird dort über Gleichrichterdioden gleichgerichtet und über eine Glättungsdrossel in Verbindung mit einem Glättungskondensator geglättet. Mit der beschriebenen Funktionsweise stellt der Gleichspannungswandler an seinem Ausgang eine gegenüber seiner Eingangsspannung betraglich herabgesetzte, galvanisch entkoppelte und stabilisierte Gleichspannung zur Verfügung.

Sowohl der Hochsetzsteller wie auch der Gleichspannungswandler weisen in den beschriebenen Hochspannungs-Grundschaltungen eine Reihenschaltung von Schaltventilen auf, um den Spannungsabfall an einem einzelnen Schaltventil zu reduzieren. Bei der obigen Beschreibung der Funktionsweise beider Schaltungen ist eine hochsynchrone Schaltung der Schaltventile unbedingt erforderlich, da sonst hinsichtlich ihres Betrages unsymmetrische Spannungsabfälle an den einzelnen Schaltventilen auftreten. Im Extremfall kann der Spannungsabfall an einem einzelnen Schaltventil dessen zulässige Spannung deutlich übersteigen und zu dessen Zerstörung führen. Dies kann den Ausfall des gesamten Spannungswandlers zur Folge haben.

Eine hochsynchrone Ein- und Ausschaltung erweist sich aber im praktischen Betrieb als nur sehr schwer realisierbar, denn alle verwendeten Bauelemente, incl. die Schaltventile, zeigen gewisse Fertigungstoleranzen, die sich in uneinheitlichen Betriebsparametern widerspiegeln.

Um die gewünschte Synchronisation des Schaltvorgangs bei den verwendeten, in Reihe geschalteten Schaltventilen zu erreichen, mit dem Ziel, die unerwünschten Überspannungen an einzelnen Schaltventilen zu vermeiden, wurden bisher teure und komplexe, speziell angefertigte Treiberschaltungen in Verbindung mit speziellen Schaltventilen und Freilaufdioden verwendet.

Es ist daher die Aufgabe der Erfindung, eine vereinfachte und verbilligte Schaltung für einen Spannungswandler bereit zu stellen, in der die verwendeten Bauelemente auch im Hochspannungsbetrieb gegen schaltungsbedingte Überspannung geschützt sind.

Diese Aufgabe wird durch die in den Patentansprüchen 1 und 7 definierten Gegenstände gelöst. Bevorzugte Ausgestaltungen sind Gegenstand der Unteransprüche.

Bei dem erfindungsgemäßen Hochsetzsteller ist wenigstens eine Kurzschlußverbindung zwischen zwei in Reihe geschalteten Schaltventile und zwei in Reihe geschalteten Kondensatoren vorgesehen. Durch diese Kurzschlußverbindung werden zwei Maschen ausgebildet, wodurch der maximale Spannungsabfall über einzelnen Bauelementen der Maschen schaltungstechnisch begrenzt wird. Damit entfällt die Notwendigkeit der hochsynchronen Schaltung, um das Auftreten von Überspannungen zu verhindern.

Mit der aufgezeigten Lösung kann im Hochsetzsteller auf teure und ausfallgefährdete Spezialbauelemente verzichtet werden. Darüber hinaus erlaubt sie die Verwendung von Standardbauelementen, insbesondere von Standard-Schaltventilen und Standard-Freilaufdioden. Diese zeichnen sich gegenüber Spezialanfertigungen durch eine höhere Zuverlässigkeit und geringere Kosten aus. Außerdem wird dadurch die Abhängigkeit des Herstellers des Hochsetzstellers von einigen Spezialzulieferern reduziert.

Vorzugsweise werden durch die Kurzschlußverbindung zwei Maschen ausgebildet, wobei jede Masche ein Schaltventil ($S_1$, $S_2$) einen Kondensator ($C_1$ - $C_8$), eine Freilaufdiode ($D_1$, $D_2$) und die Kurzschlußverbindung ausweist.

Für den Einsatz bei Hochspannung und bei hohen Strömen ist es vorteilhaft, wenn die verwendeten Freilaufdioden aus einer Reihenschaltung parallel verbundener Dioden und Kondensatoren bestehen, um eine ausreichende Spannungs- und Stromfestigkeit zu erzielen.

Zur Gewährleistung einer hohen Spannungsfestigkeit besteht im Hochsetzsteller jedes Schaltventil vorzugsweise aus mehreren in Reihe geschalteten Transistoren und jeder Kondensator vorzugsweise aus mehreren in Reihe geschalteten Teilkondensatoren.

Aus Symmetriegründen ist es vorteilhaft, wenn der Hochsetzsteller eine zentrale Steuerung aufweist, welche die Schaltventile zeitsynchron ansteuert.

Bei dem erfindungsgemäßen Gleichspannungswandler sind durch Ausbilden wenigstens einer Kurzschlußverbindung zwischen einem ersten Zweig mit mehreren seriell verbundenen Schaltventilen und einem dazu parallelen Zweig mit mehreren seriell verbundenen Kondensatoren mehrere Gleichspannungswandlermodule ausgebildet. Durch das Vorsehen mehrerer Gleichspannungswandlermodule wird der maximale Spannungsabfall über einzelnen Bauelementen schaltungstechnisch begrenzt. Damit entfällt die Notwendigkeit der hochsynchronen Schaltung, um das Auftreten von möglichen Überspannungen zu verhindern.

Aufgrund seines modularen Aufbaus kann der Gleichspannungswandler sehr einfach und flexibel durch eine Variation der Anzahl seiner Module an individuell zu schaltende Spannungen und Leistungen angepaßt werden.

Mit der aufgezeigten Lösung kann im Gleichspannungswandler auf teure und ausfallgefährdete Spezialbauelemente verzichtet werden. Darüber hinaus erlaubt sie die Verwendung von Standardbauelementen, insbesondere von Standard-Schaltventilen und Standard-Freilaufdioden. Diese zeichnen sich gegenüber Spezialanfertigungen durch eine höhere Zuverlässigkeit und geringere Kosten aus. Außerdem werden dadurch die Abhängigkeit des Herstellers des Gleichspannungswandlers von Spezialzulieferern und die Kosten für die Herstellung des Gleichspannungswandlers reduziert.

In einer bevorzugten Ausgestaltung besitzt jedes Gleichspannungswandlermodul zwei Maschen, welche eine gemeinsame Primärwicklung aufweisen. Diese Schaltungsweise ermöglicht eine zeitversetzte Ansteuerung der einzelnen Primärwicklungen, wodurch die Spannungen auf der Sekundärseite phasenversetzt induziert werden und so der Glättungsaufwand für die Ausgangsspannung erheblich reduziert wird.

Vorzugsweise wird eine Gleichrichtung der Sekundärspannung dadurch erzielt, daß an der Sekundärseite jedes Transformators des Gleichspannungswandlers wenigstens eine Gleichrichterdiode angeschlossen ist.

Zur Erzielung einer erhöhten Spannungs- und Stromfestigkeit ist es vorteilhaft, für jede Gleichrichterdiode eine Reihenschaltung von Dioden mit zugeordneten Beschaltungs-Kondensatoren vorzusehen.

Zur Gewährleistung einer hohen Spannungsfestigkeit besteht im Gleichspannungswandler jeder Kondensator vorzugsweise aus mehreren in Reihe geschalteten Teilkondensatoren.

Es ist weiterhin von Vorteil, wenn jedes Schaltventil einzeln ansteuerbar ist. Insbesondere ist es vorteilhaft, wenn der Gleichspannungswandler eine Steuerung aufweist, welche die Schaltventile in der Weise ansteuert, daß die Ströme durch die Primärspulen der Transformatoren jeweils um einen Teil der Periode des Primärspulenstromes gegeneinander phasenverschoben sind. Daraus resultieren Ströme durch die Sekundärspulen der Transformatoren, welche in einem gemeinsamen Knoten aufaddiert werden können. Die aus der Addition der phasenverschobenen Sekundärströme resultierenden Amplitudenschwankungen sind erheblich geringer als bei der Addition phasengleicher Ströme, so daß ein nachfolgender Glättungsaufwand am Ausgang des Gleichspannungswandlers erheblich reduziert werden kann.

Es erfolgt nun eine detaillierte Beschreibung der Ausführungsbeispiele der vorliegenden Erfindung unter Bezugnahme auf die Fig. 1 bis 7. Dabei zeigen:

Fig. 1 eine Grundschaltung für einen Hochsetzsteller gemäß dem Stand der Technik;

Fig. 2 eine Grundschaltung für die Primärseite eines Gleichspannungswandlers gemäß dem Stand der Technik;

Fig. 3 einen Hochsetzsteller als Teil eines Spannungswandlers gemäß der vorliegenden Erfindung;

Fig. 4 einen Gleichspannungswandler als Teil des Spannungswandlers gemäß der vorliegenden Erfindung;

Fig. 5 ein Zeitdiagramm für die Ströme auf der Primärseite des Gleichspannungswandlers gemäß Fig. 4;

Fig. 6 ein detailliertes Ausführungsbeispiel für einen Spannungswandler gemäß der vorliegenden Erfindung, bestehend aus einem Hochsetzsteller mit nachgeschaltetem Gleichspannungswandler; und

Fig. 7 ein Zeitdiagramm für Ströme auf der Primär- und Sekundärseite des Gleichspannungswandlers gemäß Fig. 6.

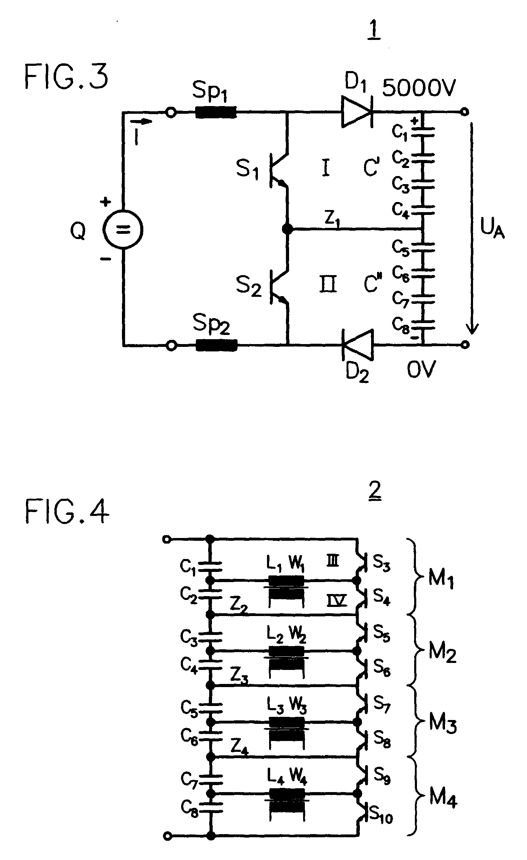

Zunächst wird Bezug genommen auf ein Ausführungsbeispiel für einen Hochsetzsteller 1 gemäß Fig. 3. An eine Eingangs-Gleichspannung Q sind zwei Spulen $Sp_1$ und $Sp_2$ mit einer zwischen die Spulen geschalteten Reihenschaltung zweier Schaltventile $S_1$ und $S_2$ angeschlossen. Parallel zum Schaltventil $S_1$ liegt die Reihenschaltung einer Freilaufdiode $D_1$ mit einem Kondensator $C'$, der wiederum aus einer Reihenschaltung der Kondensatoren $C_1$ bis $C_4$ besteht. Die Anode der Freilaufdiode $D_1$ ist mit dem Knoten zwischen der Spule $Sp_1$ und dem Schaltventil $S_1$ verbunden, während ihre Kathode mit einem Anschluß des Kondensators $C'$ verbunden ist. Parallel zum Schaltventil $S_2$ liegt die Reihenschaltung eines Kondensators $C''$ mit einer Freilaufdiode $D_2$, wobei deren Kathode unmittelbar mit dem Knoten zwischen der Spule $Sp_2$ und dem Schaltventil $S_2$ verbunden ist. Die gegenüber der Eingangsspannung hochgesetzte Ausgangspannung $U_A$ ist über der Reihenschaltung von $C'$ und $C''$ abzugreifen.

Wenn die Schaltventile $S_1$ und $S_2$ zeitsynchron angesteuert werden, so sind beim Hochsetzsteller 1 grundsätzlich nur zwei Schaltungszustände, nämlich Ventile $S_1$ und $S_2$ leitend oder Ventile $S_1$ und $S_2$ sperrend zu unterscheiden.

Im ersten Schaltzustand wird Energie von der Eingangsspannungsquelle Q in die Spulen $Sp_1$ und $Sp_2$ übertragen, während im zweiten Schaltzustand diese Energie an die Reihenschaltung der Kondensatoren $C'$ und $C''$ übertragen wird, wobei die Kondensatoren auf eine erhöhte Spannung, bestehend aus der Eingangsspannung zzgl. den beiden in den Spulen $Sp_1$ und $Sp_2$ induzierten Spannungen, aufgeladen werden. Dabei gilt folgende Gesetzmäßigkeit: Zusätzlich zu der bereits in den Kondensatoren C' und C" gepufferten Energie wird den Kondensatoren noch die in den Spulen gespeicherte Energie $E = E_{SP1} + E_{SP2} = 1/2\,I^2\,(L_{SP1} + L_{SP2})$ zugeführt, wobei $L_{SP1}$ und $L_{SP2}$ die Induktivitäten der beiden Spulen $Sp_1$ und $Sp_2$ bezeichnen. Die zugeführte Energie E bewirkt an den beiden Kondensatoren eine Erhöhung ihrer Ausgangsspannung $U_A$ um $\Delta U$ gemäß der Formel $(\Delta U)^2 = 2E / (C' + C")$.

Durch die erfindungsgemäße Kurzschlußverbindung $Z_1$, die die Knoten zwischen den beiden Schaltventilen $S_1$ und $S_2$ und den beiden Kondensatoren C' und C" miteinander verbindet, werden zwei Maschen I und II ausgebildet. Die Masche I umfaßt das Schaltventil $S_1$, die Freilaufdiode $D_1$ und den Kondensator C'. Die Masche II umfaßt das Schaltventil $S_2$, die Freilaufdiode $D_2$ und den Kondensator C". Gemäß der Maschenregel wird der Spannungsabfall über $S_1$ und $D_1$ durch die Spannung an C', und der Spannungsabfall über $S_2$ und $D_2$ durch die Spannung über C", begrenzt. Unsymmetrische Spannungsverteilungen über den beiden Schaltventilen $S_1$ und $S_2$ sowie über den Freilaufdioden $D_1$ und $D_2$, die für einzelne, zu hoch belastete Schaltventile oder Freilaufdioden eine Zerstörung zur Folge haben können, werden also durch den Verbindungszweig $Z_1$ vermieden.

Die Spannungsbegrenzung wirkt auch bei nicht-synchroner Ansteuerung der Schaltventile, so daß hier - im Gegensatz zum Stand der Technik - eine hochsynchrone Ansteuerung der Schaltventile nicht erforderlich ist. Gleichzeitig kann damit auf ein in Fig. 1 dargestelltes drittes Schaltventil, das dort aus Sicherheitsgründen zur Verringerung der Spannungsbelastung für jedes einzelne in Reihe geschaltete Schaltventil vorzusehen ist, verzichtet werden.

Fig. 4 zeigt einen erfindungsgemäßen Gleichspannungswandler 2, der einen ersten Zweig mit den seriell verbundenen Schaltventilen $S_3$ bis $S_{10}$, sowie einen zum ersten parallel geschalteten zweiten Zweig mit den seriell verbundenen Kondensatoren $C_1$ bis $C_8$ aufweist. Zwischen den beiden Zweigen sind vier Transformatoren $W_1$ bis $W_4$ angeschlossen. Die Primärspulen $L_1$ bis $L_4$ der Transformatoren sind mit jeweils einem ersten Anschluß mit den Knoten zwischen den Kondensatoren $C_1$ und $C_2$, $C_3$ und $C_4$, $C_5$ und $C_6$, sowie $C_7$ und $C_8$ verbunden, während ihre zweiten Anschlüsse jeweils mit den Knoten zwischen den Schaltventilen $S_3$ und $S_4$, $S_5$ und $S_6$, $S_7$ und $S_8$, sowie $S_9$ und $S_{10}$ verbunden sind. Darüberhinaus weist der Gleichspannungswandler Kurzschlußverbindungen $Z_2$, $Z_3$ und $Z_4$ auf, die jeweils die Knoten zwischen den Kondensatoren $C_2$ und $C_3$ und den Schaltventilen $S_3$ und $S_5$, die Knoten zwischen den Kondensatoren $C_4$ und $C_5$ und den Schaltventilen $S_6$ und $S_7$, sowie zwischen den Kondensatoren $C_6$ und $C_7$ und den Schaltventilen $S_8$ und $S_9$ kurzschließen. Durch diesen Schaltungsaufbau wird der Gleichspannungswandler in mehrere Gleichspannungswandlermodule $M_1$ bis $M_4$ aufgetrennt. Dabei gestattet jedes Modul eine individuelle Ansteuerung der ihm zugeordneten Primärspule $L_1$ bis $L_4$.

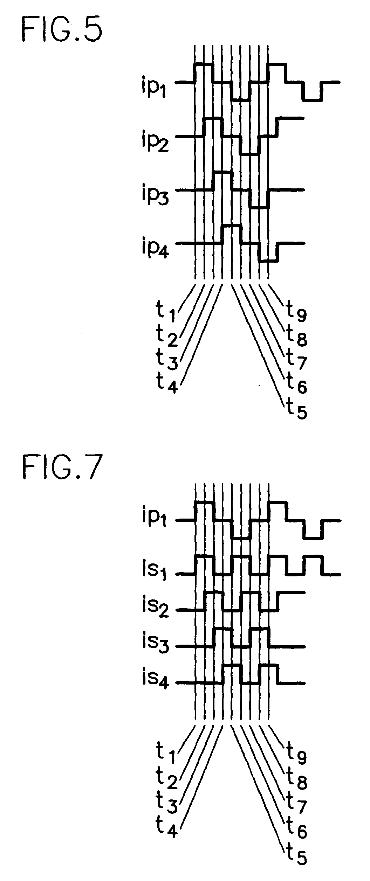

Zum besseren Verständnis der Funktionsweise des Gleichspannungswandlers wird auf Fig. 5 verwiesen, in der die Ströme $ip_1$ bis $ip_4$ durch die Primärwicklungen $L_1$ bis $L_4$ dargestellt sind. Wie in Fig. 5 in Verbindung mit Fig. 4 zu erkennen ist, fließt durch die Primärspule $L_1$ des Gleichspannungswandlermoduls $M_1$ ein periodischer rechteckiger pulsförmiger Wechselstrom $ip_1$ mit der Periodendauer T, der durch periodisches abwechselndes Schalten der Schaltventile $S_3$ und $S_4$ mit jeweils geringen Schaltpausen hervorgerufen wird. Genauer gesagt wird zum Zeitpunkt $t_1$ im Modul $M_1$ das Schaltventil $S_3$ durchgeschaltet, während gleichzeitig das Schaltventil $S_4$ sperrt. Dieser Schaltzustand erzeugt einen ersten Stromfluß in der Primärspule $L_1$, der bis zum Zeitpunkt $t_3$ anhält. Während des Zeitraumes $t_3$ bis $t_5$ sperren beide Schaltventile $S_3$ und $S_4$, so daß kein Strom durch die Spule $L_1$ fließt. Im nachfolgenden Schaltzyklus $t_5$ bis $t_7$ bleibt das Schaltventil $S_3$ gesperrt, während das Schaltventil $S_4$ leitet. Dieser Schaltzustand erzeugt in der Spule $L_1$ einen zweiten Stromfluß, der allerdings gegenüber dem ersten Stromfluß umgekehrt gepolt ist. Im abschließenden Schaltzyklus $t_7$ bis $t_9$ sperren wieder beide Schaltventile $S_3$ und $S_4$, bevor sich die beschriebenen Schaltzyklen ab dem Zeitpukt $t_9$ wiederholen.

Für das Modul $M_2$ und den Strom $ip_2$ durch die Primäwicklung $L_2$ sind die entsprechenden Zeitpunkte $t_2$, $t_4$, $t_6$ und $t_8$.

In analoger Weise entstehen in den Modulen $M_3$ und $M_4$ die Ströme $ip_3$ und $ip_4$ durch die Primärwicklungen $L_3$ und $L_4$ durch abwechselndes Schalten der ihnen jeweils zugeordneten Schaltventile. Die Ansteuerung der Schaltventile $S_3$ bis $S_{10}$ erfolgt in der Weise, daß bei vier Modulen die Ströme $ip_1$ bis $ip_4$ jeweils um eine Achtel Periode gegeneinander phasenverschoben sind. Allgemein wird die Größe der Phasenverschiebung der Ströme in Abhängigkeit der Anzahl der verwendeten Gleichspannungswandlermodule gesteuert und eingestellt.

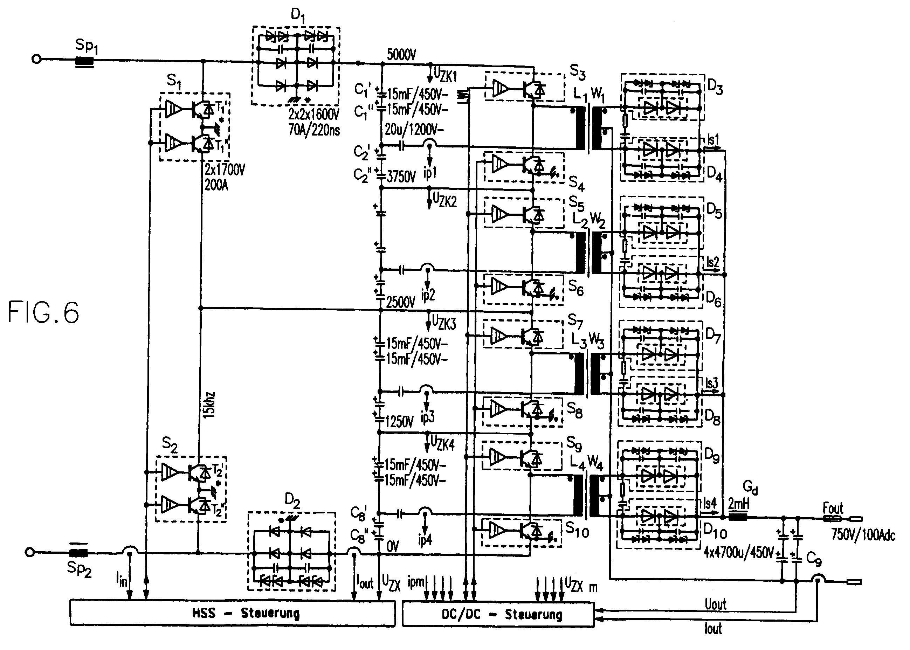

Fig. 6 zeigt als drittes Ausführungsbeispiel der vorliegenden Erfindung eine Hintereinanderschaltung von Hochsetzsteller und nachgeschaltetem Gleichspannungswandler, welche schematisch in den Fig. 4 und 5 dargestellt sind. Im Unterschied zu den Fig. 4 und 5 sind in Fig. 6 insbesondere die für den Einsatz bei Hochspannung wesentlichen Details der Schaltung hervorgehoben.

So ist zu erkennen, daß die Spannungsbelastung an zahlreichen Bauelementen dadurch reduziert wird, daß nicht einzelne Bauelemente, sondern Reihen- oder Parallelschaltungen von mehreren gleichartigen, kleiner dimensionierten Standard-Bauelementen verwendet werden. Dieses Grundprinzip des Schaltungsaufbaus einer Hochspannungsschaltung wurde sowohl bei der Dimensionierung der Schaltventile $S_1$ und $S_2$ wie auch bei der Dimensionierung der Gleichrichterdioden $D_3$ bis $D_{10}$ und der Kondensatoren $C_1$ bis $C_8$ berücksichtigt.

Danach ist jedes der Schaltventile $S_1$ und $S_2$ als ein sogenanntes Doppelmodul ausgebildet. Jedes Doppelmodul weist zwei, auf einem Herstellungschip integrierte, in Reihe geschaltete Hochspannungstransistoren $T_1'$, $T_1''$ bzw. $T_2'$, $T_2''$ auf, die im vorliegenden Fall jeweils für Spannungen von 1700 V und Ströme von 200 A ausgelegt sind. Bei der Integration von zwei Transistoren auf einem Chip ist eine synchrone Ansteuerung der beiden Einzeltransistoren einfach zu realisieren, weil dann nur marginale bauteilbedingte Toleranzen auftreten, die für eine synchrone Ansteuerung beider Transistoren mit einem Doppel-Treiber vernachlässigbar sind. Die Gleichrichterdioden weisen jeweils eine Reihenschaltung von zwei schnellen Einzeldioden auf, die für eine Spannungsbelastbarkeit von 1600 V ausgelegt sind. Zur Erhöhung der Strombelastbarkeit der Gleichrichterdioden sind zu den Einzeldioden jeweils noch mehrere Dioden- und Beschaltungs-Kondensatorzweige sowie Überspannungsschutz-Suppressoren parallel geschaltet. Die Kondensatoren $C_1$ bis $C_8$ bestehen jeweils aus einer Reihenschaltung der Kondensatoren $C_1'$, $C_1''$ bis $C_8'$, $C_8''$.

Fig. 6 zeigt darüber hinaus die Sekundärseite des Gleichspannungswandlers 2, an deren Ausgang eine stabile, gegenüber dem Eingang der Primärseite potentialgetrennte, herabgesetzte Gleichspannung erzeugt wird.

An die äußeren Klemmen der Sekundärwicklungen jedes Transformators $W_1$ bis $W_4$ sind jeweils die Gleichrichterdioden $D_3$ bis $D_{10}$ angeschlossen. Die Ausgangsströme $i_{S1}$ - $i_{S4}$ durch die Dioden fließen in einen gemeinsamen Knoten und von dort in eine nachgeschaltete Glättungsdrossel Gd. Der Glättungsdrossel Gd nachgeschaltet befindet sich parallel zum Ausgang des Gleichspannungswandlers ein Glättungskondensator $C_9$. Die Drossel $G_d$ und der Kondensator $C_9$ bilden das sog. Ausgangsfilter.

Die Funktionsweise des Spannungswandlers gemäß Fig. 6 ist prinzipiell dieselbe wie die Funktionsweise des Hochsetzstellers gemäß Fig. 3 und des nachgeschalteten Gleichspannungswandlers gemäß Fig. 4. An seinem Eingang kann der Spannungswandler, der für eine Leistung von 10 kW bis 100 kW ausgelegt ist, Spannungen in Höhe von ca. 700 bis 4500 V Gleichspannung oder gleichgerichtete Wechselspannung aufnehmen. Die Eingangsspannung wird im Hochsetzsteller auf eine betraglich größere Gleichspannung an dessen Ausgang erhöht. Die Ausgangsspannung des Hochsetzstellers dient gleichzeitig als Eingangsspannung für den nachgeschalteten Gleichspannungswandler, der diese Spannung in eine stabilisierte und galvanisch entkoppelte Gleichspannung an seinem Ausgang transformiert.

Aus Fig. 6 ist zu entnehmen, daß sowohl im Hochsetzsteller 1 wie auch im Gleichspannungswandler 2 die Ansteuerung der Schaltventile $S_1$, $S_2$ bzw. $S_3$ bis $S_{10}$ jeweils über eine HSS-Steuerung bzw. DC/DC-Steuerung erfolgt. Darüberhinaus erfaßt die Steuerung des Hochsetzstellers HSS-Steuerung den Strom $I_{out}$ und die Spannung $U_{zk}$ vor der Freilaufdiode $D_2$, sowie den Strom $I_{in}$ vor der Spule $Sp_2$. Die DC/DC-Steuerung erfaßt neben den Strömen $ip_1$ bis $ip_4$ in den Primärwicklungen $L_1$ bis $L_4$ auch die Potentiale $U_{zkm}$ der Kurzschlußverbindungen der Primärseiten, d.h. die Betriebsspannungen der Gleichspannungswandlermodule $M_1$ bis $M_4$.

Die Ansteuerung der Schaltventile $S_3$ bis $S_{10}$ des Gleichspannungswandlers erfolgt in der Weise, wie dies bereits in Fig. 5 erläutert wurde. Als Folge des in Fig. 5 gezeigten Stromverlaufs innerhalb der Primärspulen $L_1$ bis $L_4$ der Transformatoren $W_1$ bis $W_4$ ergibt sich für die Sekundärströme $is_1$ bis $is_4$ ein pulsförmiger periodischer Stromverlauf wie er in Fig. 7 dargestellt ist. Die Sekundärströme $is_1$ bis $is_4$ sind gegenüber ihren zugehörigen Primärströmen durch die Anordnung der Dioden $D_3$ bis $D_{10}$ im Sekundärkreis gleichgerichtet, so daß sie alle eine gleiche Periodendauer aufweisen, die aber aufgrund der erfolgten Zweiweg-Gleichrichtung gegenüber der Periodendauer der Primärströme auf die Hälfte reduziert wurde.

Die in Fig. 5 gezeigte Phasenverschiebung der Primärströme überträgt sich bei jedem Transformator $W_1$ bis $W_4$ auf die Sekundärseite und führt dort zu einer Phasenverschiebung der Sekundärströme $is_1$ bis $is_4$ gemäß Fig. 7. Aufgrund der erfolgten Zweiwege-Gleichrichtung beträgt die Phasenverschiebung der Sekundärströme allerdings nur noch eine Viertel Periode bei gleichen Zeitpunkten $t_1$ bis $t_9$ wie in Fig. 5.

Diese Phasenverschiebung der Sekundärströme ist, wie oben beschrieben, vorteilhaft und daher erwünscht. Durch die Überlagerung der phasenverschobenen Ströme $is_1$ bis $is_4$ zu einem resultierenden Ausgangsstrom sind erheblich geringere Amplitudenschwankungen als bei einem vergleichbaren resultierenden Strom gemäß dem Stand der Technik zu erwarten, bei dem die Sekundärströme aufgrund der Reihenschaltung der Primärspulen $\underline{L}_1$ bis $\underline{L}_3$ phasengleich sind. Aufgrund er erfindungsgemäß erzielten Verringerung der Amplitudenschwankungen ist der Glättungsaufwand für den Strom bzw. die Spannung am Ausgang des Gleichspannungswandlers bei der vorliegenden Erfindung erheblich reduziert. Erfindungsgemäß sind daher eine kleinere Glättungsdrossel Gd und ein kleinerer, parallel zum Ausgang geschalteter Glättungskondensator $C_9$ erforderlich, um eine stabile Gleichspannung am Ausgang des Gleichspannungswandlers 2 bereitstellen zu können.

## Patentansprüche

1. Spannungswandler mit einem Hochsetzsteller (1) und einem diesem nachgeschalteten Gleichspannungswandler (2), wobei der Hochsetzsteller eine Induktivität ($Sp_1$, $Sp_2$), einen ersten Zweig mit mehreren seriell verbundenen Schaltventilen ($S_1$, $S_2$) und einen dazu parallelen zweiten Zweig mit mehreren seriell verbundenen Kondensatoren ($C_1$ - $C_8$) aufweist,
   **dadurch gekennzeichnet**, daß
   der Hochsetzsteller (1) wenigstens eine Kurzschlußverbindung ($Z_1$) zwischen zwei der in Reihe geschalteten Schaltventile ($S_1$, $S_2$) und zwei der in Reihe geschalteten Kondensatoren ($C_1$ - $C_8$) aufweist.

2. Spannungswandler nach Anspruch 1 **dadurch gekennzeichnet**, daß durch die Kurzschlußverbindung zwei Maschen (I, II) ausgebildet sind, wobei jede Masche Abschnitte der beiden parallelen Zweige, eine Freilaufdiode ($D_1$, $D_2$) und die Kurzschlußverbindung aufweist.

3. Spannungswandler nach Anspruch 2 , **dadurch gekennzeichnet**, daß jede Freilaufdiode ($D_1$, $D_2$) aus einer Reihenschaltung parallel verbundener Dioden und Kondensatoren besteht.

4. Spannungswandler nach einem der Ansprüche 1 bis 3, **dadurch gekennzeichnet**, daß jedes Schaltventil ($S_1$, $S_2$) aus mehreren, in Reihe geschalteten Transistoren ($T_1'$, $T_1''$, $T_2'$, $T_2''$)besteht.

5. Spannungswandler nach einem der Ansprüche 1 bis 4, **dadurch gekennzeichnet**, daß jeder Kondensator ($C_1$ - $C_8$) aus mehreren, in Reihe geschalteten Teilkondensatoren ($C_1'$, $C_1''$ - $C_8'$, $C_8''$) besteht.

6. Spannungswandler nach einem der Ansprüche 1 - 5, **dadurch gekennzeichnet**, daß der Hochsetzsteller (1) eine Steuerung (HSS - Steuerung) aufweist, die die Schaltventile ($S_1$, $S_2$) zeitsynchron ansteuert.

7. Spannungswandler mit einem Hochsetzsteller (1) und einem diesem nachgeschalteten Gleichspannungswandler (2), wobei der Gleichspannungswandler einen ersten Zweig mit mehreren seriell verbundenen Schaltventilen ($S_3$ - $S_{14}$), einen dazu parallelen zweiten Zweig mit mehreren seriell verbundenen Kondensatoren ($C_1$ - $C_8$) und wenigstens einen Transformator ($W_1$ - $W_4$) aufweist, der zwischen beiden Zweigen angeschlossen ist,
   **dadurch gekennzeichnet,** daß
   der Gleichspannungswandler (2) durch Ausbilden wenigstens einer Kurzschlußverbindung ($Z_2$ - $Z_4$) zwischen beiden Zweigen in mehrere Gleichspannungswandlermodule ($M_1$ - $M_4$) aufgetrennt ist.

8. Spannungswandler nach Anspruch 7, **dadurch gekennzeichnet**, daß jedes Modul ($M_1$ - $M_4$) durch zwei Kurzschlußverbindungen ($Z_2$ - $Z_4$) sowie eine leitende Verbindung zwischen den beiden Zweigen, die eine Primärspule ($L_1$ - $L_4$) der Transformatoren ($W_1$ - $W_4$) aufweist, in zwei Maschen (III, IV) aufgetrennt ist, wobei jede Masche neben der gemeinsamen Primärspule, ein Schaltventil ($S_3$ - $S_{10}$) und einen Kondensator ($C_1$ - $C_8$) aufweist.

9. Spannungswandler nach einem der Ansprüche 7 - 8, **dadurch gekennzeichnet**, daß jedes Schaltventil ($S_3$ - $S_{10}$) wenigstens einen Transistor mit einem potentialgetrennten Ansteuertreiber und einer Freilaufdiode aufweist.

10. Spannungswandler nach einem der Ansprüche 7 - 9, **dadurch gekennzeichnet**, daß an der Sekundärseite jedes Transformators ($W_1$ - $W_4$) wenigstens eine Gleichrichterdiode ($D_3$ - $D_{10}$) angeschlossen ist.

11. Spannungswandler nach Anspruch 10, **daduch gekennzeichnet**, daß jede Gleichrichterdiode ($D_3$ - $D_{10}$) aus einer Reihenschaltung von Dioden mit zugeordneten Beschaltungs-Kondensatoren besteht.

12. Spannungswandler nach einem der Ansprüche 7 - 11, **dadurch gekennzeichnet**, daß jeder Kondensator ($C_1$ - $C_8$) mehrere in Reihe geschaltete Teilkondensatoren ($C_1'$, $C_1''$ - $C_8'$, $C_8''$) aufweist.

13. Spannungswandler nach einem der Ansprüche 8 - 12, **dadurch gekennzeichnet**, daß jedes Schaltventil ($S_3$ - $S_{14}$) einzeln ansteuerbar ist.

14. Spannungswandler nach Anspruch 13, **dadurch gekennzeichnet**, daß der Gleichspannungswandler (2) eine Steuerung (DC/DC-Steuerung) aufweist, welche die Schaltventile ($S_3$ - $S_{14}$) in der Weise ansteuert, daß die Ströme ($ip_1$ - $ip_4$) durch die Primärspulen ($L_1$ - $L_4$) der Transformatoren jeweils um einen Teil der Periode des Primärspulenstromes gegeneinander phasenverschoben sind.

FIG.1

Stand der Technik

FIG.2

Stand der Technik

FIG.3

FIG.4

FIG.5

ip₁

ip₂

ip₃

ip₄

t₁ t₉
t₂ t₈
t₃ t₇
t₄ t₆
t₅

FIG.7

ip₁

is₁

is₂

is₃

is₄

t₁ t₉
t₂ t₈
t₃ t₇
t₄ t₆
t₅

FIG.6

**Europäisches Patentamt**

## EUROPÄISCHER RECHERCHENBERICHT

Nummer der Anmeldung

EP 98 10 2370

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 41 12 907 C (SIEMENS NIXDORF INOFORMATIONSSYSTEME) 30. April 1992 * Spalte 2, Zeile 2 - Spalte 4, Zeile 52; Abbildungen 1,2 * | 1,2,6 | H02M3/158 |
| Y | | 3-5 | |
| | --- | | |
| Y | EP 0 250 719 A (SIEMENS AG) 7. Januar 1988 * Spalte 1, Zeile 48 - Spalte 4, Zeile 31; Abbildungen 1,2 * | 3-5 | |
| | --- | | |
| Y | EP 0 676 854 A (VLT CORP) 11. Oktober 1995 * Spalte 1, Zeile 50 - Spalte 3, Zeile 31; Abbildungen 1-3 * | 3 | |
| | --- | | |
| A | EP 0 654 887 A (MERLIN GERIN) 24. Mai 1995 | | |
| | --- | | |
| A | DE 43 05 768 A (LICENTIA GMBH) 1. September 1994 | | |
| | --- | | |
| A | POVH D: "High voltage direct current transmission technology" ELEKTROTECHNIK UND MASCHINENBAU, NOV. 1984, AUSTRIA, Bd. 101, Nr. 11, Seiten 496-503, XP002069728 ISSN 0012-8058 | | RECHERCHIERTE SACHGEBIETE (Int.Cl.6) H02M |
| | ----- | | |

~~Der vorliegende Recherchenbericht wurde für alle Patentansprüche erstellt~~

| Recherchenort | Abschlußdatum der Recherche | Prüfer |
|---|---|---|
| DEN HAAG | 29. Juni 1998 | Albertsson, E |

EPO FORM 1503 03 82 (P04C03)

**Europäisches**
**Patentamt**

Nummer der Anmeldung

EP 98 10 2370

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☒ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

1 - 6

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches** **Nummer der Anmeldung**

**Patentamt**

EP 98 10 2370

**MANGELNDE EINHEITLICHKEIT
DER ERFINDUNG
ERGÄNZUNGSBLATT B**

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-6

   Spannungswandler mit einem Hochsetzsteller (1) und einem nachgeschalteten Gleichspannungswandler (2), wobei der Hochsetzsteller eine Induktivität (Sp1, Sp2), einen ersten Zweig mit mehreren seriell verbundenen Schaltventilen (S1, S2) und einen dazu parallelen zweiten Zweig mit mehreren seriell verbundenen Kondensatoren (C1-C8) aufweist.

2. Ansprüche: 7-14

   Spannungswandler mit einem Hochsetzsteller (1) und einem nachgeschalteten Gleichspannungswandler (2), wobei der Gleichspannungswandler einen ersten Zweig mit mehreren seriell verbundenen Schaltventilen (S3-S14), einen dazu parallelen zweiten Zweig mit mehreren seriell verbundenen Kondensatoren (C1-C8) und wenigstens einen Transformator (W1-W4) aufweist, der zwischen beiden Zweigen angeschlossen ist.

**ANHANG ZUM EUROPÄISCHEN RECHERCHENBERICHT
ÜBER DIE EUROPÄISCHE PATENTANMELDUNG NR.**

EP 98 10 2370

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-1998

| Im Recherchenbericht angeführtes Patentdokument | Datum der Veröffentlichung | Mitglied(er) der Patentfamilie | Datum der Veröffentlichung |
|---|---|---|---|
| DE 4112907 C | 30-04-1992 | KEINE | |
| EP 0250719 A | 07-01-1988 | DE 3620926 C<br>FI 864600 A,B | 03-12-1987<br>24-12-1987 |
| EP 0676854 A | 11-10-1995 | EP 0881758 A<br>JP 8065889 A<br>US 5786992 A | 02-12-1998<br>08-03-1996<br>28-07-1998 |
| EP 0654887 A | 24-05-1995 | FR 2713030 A<br>US 5654591 A | 02-06-1995<br>05-08-1997 |
| DE 4305768 A | 01-09-1994 | KEINE | |

EPO FORM P0461

Für nähere Einzelheiten zu diesem Anhang : siehe Amtsblatt des Europäischen Patentamts, Nr.12/82